# EUROPEAN PATENT SPECIFICATION

(11) **EP 3 572 137 B1**
(45) Date of publication and mention of the grant of the patent: **19.06.2024**
(21) Application number: 18174040.8
(22) Date of filing: 24.05.2018
(51) Int. Cl.: B01D 15/20, G01N 30/56, B01D 15/16, G01N 30/54

(54) **CONDITIONING OF PACKED CHROMATOGRAPHY COLUMNS**
KONDITIONIERUNG VON GEPACKTEN CHROMATOGRAFISCHEN SÄULEN
CONDITIONNEMENT DE COLONNES DE CHROMATOGRAPHIE À GARNISSAGE

(43) Date of publication of application: 27.11.2019
(73) Proprietor: Biotage AB, 751 03 Uppsala (SE)
(72) Inventor: PANAGIOTIS, Ioannidis, 172 40 SUNDBYBERG (SE); WARNGREN, Anders, 756 52 UPPSALA (SE); NORDIN, Tobias, 753 31 UPPSALA (SE)
(74) Representative: Brann AB

(56) References cited:
- WO-A1-2015/140326
- GRIVEL C ET AL: "Selection of suitable operating conditions to minimize the gradient equilibration time in the separation of drugs by Ultra-High-Pressure Liquid Chromatography with volatile (mass spectrometry-compatible) buffers", JOURNAL OF CHROMATOGRAPHY A, ELSEVIER, AMSTERDAM, NL, vol. 1217, no. 4, 22 January 2010 (2010-01-22), pages 459-472, XP026823903, ISSN: 0021-9673 [retrieved on 2009-11-20]

## Description

### Technical field

The present invention relates to a method of conditioning chromatography columns.

### Background

Liquid chromatography is a well established technique for the separation of one or more target compounds from liquids. The liquid constitutes a mobile phase, which is passed across a stationary phase with which molecules or compounds present in the liquid will interact in different ways. Thus, strong interactions will slow down some molecules or compounds, while weaker interactions will allow a quicker passage, resulting in a differential fractionation of compounds or molecules eluting at different points in time.

In normal phase chromatography, a hydrophilic stationary phase having a stronger affinity for hydrophilic compounds is used together with a less hydrophilic, i.e. less polar mobile phase. If such a mobile phase is driven across a column comprising the stationary phase, e.g. by pumping or by applying positive pressure, the technology is known as FLASH chromatography - a fast and relatively simple method frequently used to separate compounds with different polarities and functional groups.

A commonly used stationary phase in FLASH chromatography is unmodified silica, which is advantageously porous and packed in a column as a dry material. To increase its polarity, the silica is sometimes functionalized with hydrophilic groups, such as silanol groups.

Most separations performed by FLASH chromatography are preceded by a step of conditioning the stationary phase by passage of a mobile phase. Depending on the purpose, the mobile phase used for conditioning may either be the solvent used to elute target compounds during separation, or a different liquid. Conditioning may be performed in order to remove undesired impurities; to regenerate the stationary phase between runs; or simply to wet a dry stationary phase. If desired, conditioning may be performed to establish an appropriate pH by applying a buffer.

In normal phase FLASH chromatography, the stationary phase is commonly supplied in a dry format, and the conditioning thereof will comprise a wetting thereof.

In the conditioning of dry silica, a polar solvent will interact with polar groups and displace the air in pores. As the solvent adsorbs to the silica surfaces, heat will be generated due to exothermic reactions. Friction may also build up during the process and generate additional heat.

To overcome the problem of heat generation, silica FLASH cartridges are usually conditioned isocratically prior to sample injection, and the flow rate of the solvent is carefully controlled to avoid excessive heat which could otherwise negatively influence the stationary phase and other parts of the equipment. This sometimes results in a relatively time-consuming conditioning process, requiring several column volumes of solvent before an efficient wetting of the column has been achieved.

Grivel et al. (In J Chromatogr A 2010 Jan 22; 1217(4):459-72: "Selection of suitable operating conditions to minimize the gradient equilibration time in the separation of drugs by Ultra-High-Pressure Liquid Chromatography with volatile (mass spectrometry-compatible buffers) relates to reversed phase chromatography. More specifically, this article has recognized that problems are associated with long equilibration times in flash chromatography, and presents a study of temperature variation, different flow rates and various additives to the mobile phase used for equilibration. While drawing certain conclusions regarding retention variability and specific equilibration additives, it is also concluded by the authors that the mechanisms which govern equilibration remain very complex and require further work.

WO 2015/140326 (Biotage AB) relates to the equilibration of chromatography columns, and specifically to the heat-related problems that may arise in normal phase FLASH chromatography at increased flow rates. More specifically, according to WO 2015/140326, the heat generated during equilibration of a column packing may be better controlled and the total sample processing may be speeded up by the use of a combination of solvents as a gradient in the equilibration step.

However, despite the solutions proposed above, the conditioning of hydrophilic stationary phases with polar solvents remains a time-consuming step of a purification or isolation process. There is therefore still a need in the area for alternative technologies that deal with problems caused by the exothermic reactions involved when hydrophilic stationary phases are treated with a flow of less hydrophilic solvents.

### Summary of Invention

The present invention relates to a method of conditioning a dry-packed chromatography column according to claim 1.

Other aspects, details and advantages of the invention will appear from the detailed disclosure that follows.

### Definitions

The term "polar" solvent is used herein for a solvent which has a substantial dipole moment due to the polar bonds formed between atoms with very different electronegativities, such as oxygen and hydrogen.

The term "non-polar" solvent is used herein for a solvent wherein atoms have more similar dipole moments, such as carbon and hydrogen.

The term "hydrophilic" is used herein as a measure of how `water loving" a stationary phase is.

The term "hydrophobic" is used herein as a measure of how `water shunning' a stationary phase is.

The term "equilibration" is used herein in a broad sense, including bringing two different properties to balance. For example, a dry material which has been fully wetted is considered equilibrated.

### Detailed description of the Invention

The present invention relates to a method of conditioning a dry-packed chromatography column, which method comprises
a) providing a column packed with at least one inert and hydrophilic chromatography resin; and
b) driving a solvent across the column until at least one predetermined criteria is fulfilled;
wherein the solvent is less hydrophilic than the chromatography resin; and wherein the rate of the flow of solvent across the column is controlled at a rate which does not cause the column pressure to exceed a predefined threshold.

The present inventors have found that in order to save volumes of solvent, and to save time, such a conditioning may successfully be performed by maintaining the rate of the solvent flow across the column at a rate which does not cause the column pressure to exceed a predefined threshold. The pressure threshold is advantageously set at a level below pressures where heat generation is substantial enough to cause damage to the column or equipment, such as frits or filters. As the skilled person will appreciate, it is desired to maintain the flow at an as high rate as possible.

The pressure threshold may be determined by the skilled person for each specific column and conditions, advantageously by a test run where the released heat is measured for a certain pressure. Illustrative pressure thresholds for flash chromatography columns of sizes 1 g-1500 g are in the range of 1 bar-20 bar.

The predetermined criteria, i.e. the purpose of the process, may be to achieve a wetted, equilibrated or otherwise conditioned column. In this context, it is understood that in its broadest sense, the term conditioned may be interpreted as treated with a liquid in order to change or modify one or more properties. In order to judge whether or not a FLASH column has been fully wetted by solvent, its passage across the column including hydrophilic resin may be followed visually, as the front of solvent will appear clearly through a conventional transparent or substantially transparent FLASH column.

As appears from the above, the chromatography resin used according to the invention is hydrophilic rather than hydrophobic. Put differently, the material is may be any suitable material conventionally used in normal phase FLASH chromatography which together with solvents suitable for conditioning and/or elution are exposed to an increased risk of heat generation, for the reasons discussed in the section Background above. The resin may be porous silica, such unmodified silica, in the conventional particle format. Alternatively, the resin comprises alumina, which is another hydrophilic resin. Suitable silica resins may have been functionalized with silanol groups or other polar ligands in order to provide an appropriate level of hydrophilicity for an intended application.

The skilled person will be aware of the kind of solvents that may involve a risk of excessive heat generation when used with hydrophilic resins of the above-discussed kind, especially at certain particle sizes and flow rates. Illustrative solvents are e.g. methyl acetate, ethyl acetate, acetone, methyl ethyl ketone, methanol, ethanol, 2-propanol, formic acid, acetic acid, triethylamine, and N-ethyldiisopropylamin.

The packed column may be any conventional format suitable for FLASH chromatography. Thus, the column may comprise a specific compartment for addition of sample upstream of the resin; one or more frits or filters arranged downstream and/or upstream of the resin; and/or any other commonly used components.

Due to the controlled heat generation obtained with the present invention, the chromatography column may include part or parts made from heat-sensitive material. Thus, at least one frit or filter may be arranged downstream of the resin in the column. Examples of heat-sensitive materials that benefit from the use of the present invention are for example heat-sensitive plastics, such as polyethylene. The present invention may advantageously be used with such filters whereby the risk of softening or melting will be substantially reduced at advantageous high flow rates.

Also disclosed herein is a method for controlling the flow rate during the conditioning of a packed chromatography column, where a column packed with a hydrophilic resin is conditioned with a less hydrophilic solvent without exceeding a predefined pressure. The method of controlling such conditioning allows for an optimal i.e. as high flow rate as possible, and has been shown by the present inventors to utilize a smaller volume of solvent than conventional conditioning of dry chromatography resins. In an illustrative embodiment, two column volumes (CVs) are sufficient to fully wet a hydrophilic resin with a less hydrophilic solvent.

The method of controlling the heat generation during conditioning of a FLASH chromatography column as described above may be performed by a computer. Thus, the invention also embraces the control of a chromatographic process as discussed above; and software for performing such a method.

### EXPERIMENTAL PART

The present examples are provided herein for illustrative purposes only.

### Example 1 - Equilibration of a 50 g cartridge packed with 20 µm spherical silica

A cartridge containing 50 g 20 µm spherical Silica (80 mL column volume) was equilibrated at maximum allowed pressure of 10 bar using in total 160 mL of an isocratic mixture 70:30 of n-Heptane - Ethyl acetate. The flowrate was controlled and allowed to reach a maximum of 150 mL/min.

The total equilibration process was performed in 1 minute and 36 seconds. During the new equilibration process, the pressure was remained at 10 bar and the flowrate was automatically down-regulated to 20 mL/min at lowest for a few seconds, when the "heat-zone" reached the cartridge's bottom-frit after approx. 80 mL (1 column volume).

The cartridge's surface temperature was continuously monitored and was found to be 34 °C at most. After pumping additional 80 mL of the isocratic mixture (160 mL in total, 2 column volumes) at 10 bar or 150 mL/min, the cartridge's surface temperature was continuously monitored and was found to be 26 °C, and the pressure dropped to 6.3 bar at 150 mL/min. The cartridge was carefully inspected visually, and was found to be fully equilibrated.

### Example 2 - Comparative example

The cartridge describe above was also subjected to an equilibration method performed at a fixed flow rate using the same solvent.

In Method 1; 240 mL (3 column volumes) solvent mixture at 50 mL/min took 7 minutes and 12 seconds to complete the equilibration, as judged visually by the solvent from reaching the bottom of the column.

In Method 2; 400 mL (5 column volumes) solvent mixture at 100 mL/min takes 6 minutes to complete the equilibration, as judged visually by the solvent from reaching the bottom of the column.

Thus, the conventionally used conditioning was shown to use more solvent and take longer time, than the method according to the present invention.

## Claims

1. A method of conditioning a dry-packed chromatography column, which method comprises
a) providing a column packed with at least one inert and hydrophilic chromatography resin; and
b) driving a solvent isocratically across the column until two column volumes of solvent has passed;
wherein the solvent is less hydrophilic than the chromatography resin; and wherein the rate of the flow of solvent across the column is down-regulated during step b) to a rate which does not cause the column pressure to exceed a predefined threshold.

2. A method according to claim 1, wherein the resin comprises porous silica.

3. A method according to any one of the preceding claims, wherein the packed column comprises at least one filter or frit arranged downstream of the resin in the column.

4. A method according to claim 3, wherein said at least one filter or frit is manufactured from a heat-sensitive material, such as polyethylene.

## Patentansprüche

1. Verfahren zum Konditionieren einer trockengepackten Chromatografiesäule, wobei das Verfahren Folgendes umfasst
a) Bereitstellen einer Säule, die mit mindestens einem inerten und hydrophilen Chromatografieharz gefüllt ist; und
b) isokratisches Treiben eines Lösungsmittels über die Säule, bis zwei Säulenvolumina Lösungsmittel durchgelaufen sind; wobei das Lösungsmittel weniger hydrophil als das Chromatografieharz ist; und
wobei die Geschwindigkeit des Lösungsmittelstroms über die Säule während Schritt b) auf eine Geschwindigkeit herunterreguliert wird, die bewirkt, dass der Säulendruck einen vordefinierten Schwellenwert nicht überschreitet.

2. Verfahren nach Anspruch 1, wobei das Harz poröses Siliciumdioxid umfasst.

3. Verfahren nach einem der vorhergehenden Ansprüche, wobei die gepackte Säule mindestens einen Filter oder eine Fritte umfasst, der bzw. die stromabwärts des Harzes in der Säule angeordnet ist.

4. Verfahren nach Anspruch 3, wobei der Filter oder die Fritte aus einem wärmeempfindlichen Material, beispielsweise Polyethylen, hergestellt ist.

## Revendications

1. Procédé de conditionnement d'une colonne de chromatographie à garnissage sec, lequel procédé comprend
a) la fourniture d'une colonne garnie d'au moins une résine de chromatographie inerte et hydrophile ; et
b) l'entraînement isocratique d'un solvant à travers la colonne jusqu'à ce que deux volumes de colonne de solvant soient passés ; dans lequel le solvant est moins hydrophile que la résine de chromatographie ; et
dans lequel le débit du flux de solvant à travers la colonne est régulé à la baisse au cours de l'étape b) jusqu'à un débit qui n'amène pas la pression de la colonne à dépasser un seuil prédéfini.

2. Procédé selon la revendication 1, dans lequel la résine comprend de la silice poreuse.

3. Procédé selon l'une quelconque des revendications précédentes, dans lequel la colonne garnie comprend au moins un filtre ou un fritté disposé en aval de la résine dans la colonne.

4. Procédé selon la revendication 3, dans lequel ledit au moins un filtre ou fritté est fabriqué à partir d'un matériau sensible à la chaleur, tel que du polyéthylène.
